# EUROPEAN PATENT APPLICATION

(11) **EP 4 818 970 A1**
(43) Date of publication of application: **07.10.2026**
(21) Application number: 25305481.1
(22) Date of filing: 01.04.2025
(51) Int. Cl.: G06K 19/077

(54) **DATA CARRIER WITH ANTENNA CORROSION PROTECTION**

(71) Applicant: THALES DIS FRANCE SAS, 92190 Meudon (FR)
(72) Inventor: DHERS, Gilles, 13470 Carnoux en Provence (FR); BERTOLOTTI, Jean-Marie, 83270 St Cyr sur Mer (FR)
(74) Representative: Castelo, Jérôme

(57) **Abstract**

The invention relates to a data carrier with a top surface forming a plan P0 and a bottom surface, said data carrier comprising:
- a body comprising a cavity,
- a first electronic module positioned at least partially within the cavity;
- at least one antenna formed by a wire;
- at least one conductive film connecting the antenna to the first electronic module,

the cavity comprising a first depth D1 forming a first plan P1, at least part of the antenna being located on this first plan P1, at least part of the conductive film being located on plan P1,
wherein the cavity comprises a second depth D2 forming a second plan P2, the second depth D2 being inferior to the first depth D1 such that the second plan P2 is located above the first plan P1, the width W1 of the cavity at the level of plan P1 being inferior to the width W2 of the cavity at the level of plan P2 such that a ledge is formed between plan P1 and plan P2, at least part of the conductive film being located above the ledge.

## Description

### TECHNICAL FIELD

The present invention relates to data carrier, smart cards or similar devices incorporating an embedded antenna secured with conductive film, notably anisotropic conductive film (ACF). Specifically, the invention addresses cases where portions of the antenna, notably a copper antenna, remain exposed after the embedding process. The invention improves both the reliability and durability of the card by preventing corrosion of exposed antenna sections. Additionally, it enhances the cosmetic appearance of the card by ensuring that the copper antenna is fully concealed from view. More particularly, the present invention relates to a data carrier according to claim 1, to a secure article comprising or consisting of such a data carrier according to claim 12, and to a method of producing a data carrier according to claim 13.

### PRIOR ART

In smart card manufacturing, conductive film such as ACF tape is commonly used to bond a chip module onto an embedded copper antenna. However, to enable proper bonding, the copper antenna must be positioned at the same level as the embedding plane. A recurring challenge in this process arises from the unavoidable gap between the module edge and the milled cavity, which results in partial exposure of the copper antenna to air. This exposure makes the antenna susceptible to environmental corrosion, particularly in harsh conditions such as high humidity or salt mist environments. It has been demonstrated that in less than 24 hours of salt mist exposure, corrosion can sever the antenna, rendering the card non-functional. Existing solutions have attempted to address these issues through various means, including protective coatings applied to the antenna or special embedding techniques. However, these solutions often add complexity to the manufacturing process, increase costs, or fail to provide consistent protection across all production units. Therefore, there remains a need for an improved data carrier design that effectively protects the embedded antenna from corrosion while maintaining the aesthetic qualities of the card and ensuring reliable electrical connections.

### SUMMARY OF THE INVENTION

The present invention addresses the aforementioned problems by providing a data carrier having a specific cavity design that protects the antenna from exposure to environmental factors while facilitating better adhesive distribution during the module mounting process.

This object is achieved with a data carrier according to claim 1. The invention is defined as being a data carrier with a body comprising a cavity. The data carrier further comprises at least a first electronic module positioned at least partially within the cavity, at least one antenna and at least one conductive film connecting the antenna to the first electronic module. The antenna is formed by a wire, advantageously a copper wire. The antenna is advantageously embedded into the data carrier body, a portion of the antenna wire is exposed by the formation of the cavity.

The cavity comprises a first depth D1 forming a first plan P1. At least part of the antenna is located at this first plan P1. This means that at least part of the antenna wire is extending along this first plan P1. In other words, at least part of the antenna wire is crossed by the first plan P1. For example, two third or half of the thickness of the antenna wire can be under P1, the part above P1 being milled with the data carrier body when forming the cavity. In addition, at least part of the conductive film is located at plan P1.

The cavity further comprises a second depth D2 forming a second plan P2, the second depth D2 being inferior to the first depth D1 such that the second plan P2 is located above the first plan P1. The width W1 of the cavity at the level of plan P1 is inferior to the width W2 of the cavity at the level of plan P2 such that a ledge is formed between plan P1 and plan P2. At least part of the conductive film is located above the ledge. In other words, at least part of the conductive film is located at plan P2 and above. This specific configuration allows that the conductive film is positioned above the antenna and fully covers it in order to protect it from air exposure and therefore limit any risk of corrosion.

The data carrier extends along an extension direction (E) corresponding to the thickness of the data carrier and the depth of the cavity, and along a transverse direction (T) running perpendicularly to an extension direction (E) of the data carrier. The width of the cavity is extending along the so-called transverse direction (T). The exposed portion of the antenna wire, i.e. the part of the antenna wire in the cavity or facing the cavity, extending along plan P1 has a width sensibly similar to W1. In other words, the dimension of the exposed portion of the antenna wire along the transverse direction (T) is sensibly similar to the width W1 of the cavity at the level of plan P1. The dimension of at least part of the conductive film along the transverse direction (T) is sensibly similar to the width W2 of the cavity at the level of plan P2. As the width W2 of the cavity at the level of plan P2 is superior to the width W1 of the cavity at the level of plan P1, at least part of the conductive film extends beyond the exposed portion of the antenna wire along the transverse direction (T). In other words, the dimension of at least part of the conductive film along the transverse direction (T) is superior to the dimension of the exposed portion of the antenna wire along the transverse direction (T). This implies that the exposed portion of the antenna wire is fully covered by the conductive film and therefore protected from corrosion.

Advantageously, the heigh (HL) of the ledge is at least equal to the thickness or diameter of a wire forming the antenna. The heigh (HL) of the ledge can be defined as the difference between the first depth D1 and the second depth D2 of the cavity. Preferably, the heigh of the ledge is comprised between 50µm and 150µm. This heigh can vary depending on the thickness of the antenna wire.

In the same way, the width (WL) of the ledge is preferably comprised between 50µm and 150µm. The width (WL) of the ledge can be defined as half of the difference between the first width W1 and the second width W2 of the cavity.

Advantageously, the upper surface of the first electronic module flushes the top surface of the data carrier. In other words, the upper surface of the first electronic module is located in plan P0. The electronic module can advantageously be an IC chip module. The electronic module comprises a proximal extremity forming the contact pads and flushing the surface of the data carrier. The electronic module comprises a distal extremity located inside the body of the data carrier.

The cavity can comprise a third depth D3 forming a third plan P3, the third depth D3 being superior to the first depth D1 such that the third plan P3 is located below the first plan P1. The width W3 of the cavity at the level of plan P3 is inferior to the width W1 of the cavity at the level of plan P1. In this configuration, a distal extremity of the electronic module is located at the level of plan P3. This configuration is particularly adapted for electronic modules needing some space along the extension direction (E) to be incorporated inside the data carrier. It is also possible to use a so-called flat module which would need less space to be integrated. In this case the third depth D3 of the cavity is not needed as the flat module would fit inside the cavity defined by the first and second depth.

Advantageously, the conducting film comprises an ACF (Anisotropic Conductive Film). Preferably, the thickness of the ACF is comprised between 30 and 70µm.

Advantageously, the data carrier comprises a second electronic module. The second electronic module preferably comprises one sensor module for biometric reading, such as notably fingerprint reading. Preferably, the first electronic module is physically connected to the second electronic module.

Preferably, the data carrier body is a multilayer structure. The data carrier can have different structural configurations depending on the requirements. Advantageously, the data carrier comprises a metal layer. More preferably, said metal layer forms the upper surface of the data carrier. The cavity design according to the invention is particularly advantageous for a configuration of a data carrier comprising a metal layer forming the upper surface of the data carrier. Indeed, when a metal layer forms the upper surface of the data carrier, it is critical to avoid direct contact between the electronic module and the metal at the level of the cavity walls. Therefore, the space between the electronic module and the cavity walls is slightly increased compared to a data carrier with plastic body. More space between the electronic module and the cavity walls implies a higher risk of air exposure and corrosion of antenna wire. Therefore, the specific design of the cavity as described herein is particularly advantageous in a configuration of a data carrier comprising a metal layer forming the upper surface of the data carrier.

According to another aspect, the invention concerns a secure article comprising or consisting of at least one data carrier as previously disclosed. The secure article is preferably is a smart card.

According to yet another aspect, the invention concerns a method of producing a data carrier as previously disclosed. The method preferably comprises the steps of providing a body, providing at least one antenna, forming a cavity and providing a first electronic module and a conductive film.

The cavity is formed by at least one step of milling. A first milling of the body allows to form a first portion of a cavity having a first depth D1 and forming a first plan P1, the antenna being located on this first plan P1. A second milling of the body allows to form a second portion of the cavity having a second depth D2 and forming a second plan P2, the second depth D2 being inferior to the first depth D1 such that the second plan P2 is located above the first plan P1. The width W1 of the cavity at the level of plan P1 is inferior to the width W2 of the cavity at the level of plan P2 such that a ledge is formed between plan P1 and plan P2. The conductive film is advantageously pre-bonded on the electronic module. The electronic module is positioned at least partially within the cavity with the conducting film facing the antenna in order to connect the antenna to the first electronic module. At least part of the conductive film is located on plan P1. At least part of the conductive film is located above the ledge.

Preferably, the two steps of milling are simultaneous.

Advantageously, the method comprises a step of milling the body to form a third portion of the cavity having a third depth D3 and forming a third plan P3, the third depth D3 being superior to the first depth D1 such that the third plan P3 is located below the first plan P1, the width W3 of the cavity at the level of plan P3 being inferior to the width W1 of the cavity at the level of plan P1, a distal extremity of the first electronic module being located at the level of plan P3.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
Fig. 1 shows a data carrier according to the state of the art in a cross section view;
Fig. 2 shows a first data carrier according to the invention in an exploded cross section view, before inserting the electronic module in the cavity;
Fig. 3 shows the data carrier of Fig. 2 in a cross section view, after inserting the electronic module in the cavity;
Fig. 4 shows a zoom part of the data carrier according to the invention in a cross section view;
Fig. 5 shows a second data carrier according to the invention in a cross section view;
Fig. 6 shows a zoom part of the cavity of a data carrier according to the invention in a cross section view, before inserting the electronic module in the cavity;

### DESCRIPTION OF PARTICULAR EMBODIMENTS

Aspects of the invention shall be further illustrated with reference to the figures.

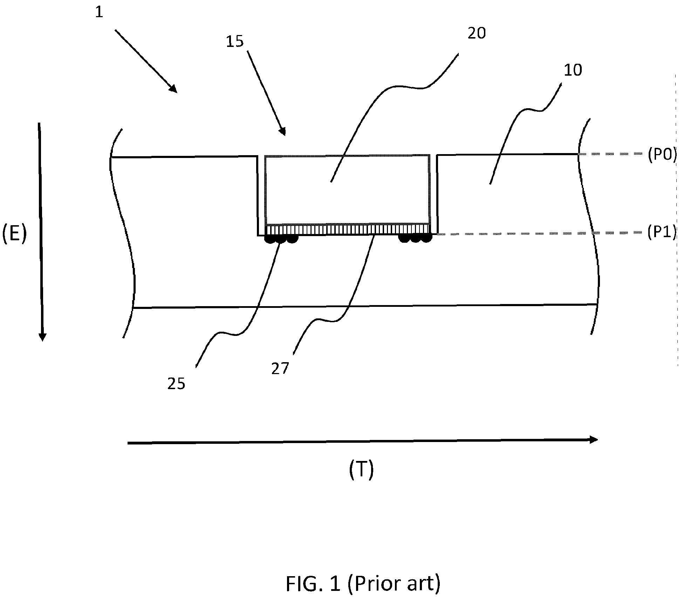

Figure 1 depicts a data carrier according to the state of the art in a cross section view. This figure illustrates the fundamental technical challenge in existing data carrier designs. The conventional configuration shows an antenna 25 within the cavity 15 covered by a conductive film 27 and an electronic module 20. There is a gap between the cavity walls and the electronic module 20, which creates a critical vulnerability to environmental corrosion. Indeed, due to this gap, an exposed portion of the antenna wire remains susceptible to degradation, particularly in high-humidity or salt mist environments. This configuration demonstrates why existing smart card designs can fail in less than 24 hours of exposure to harsh conditions, rendering the card non-functional due to antenna corrosion.

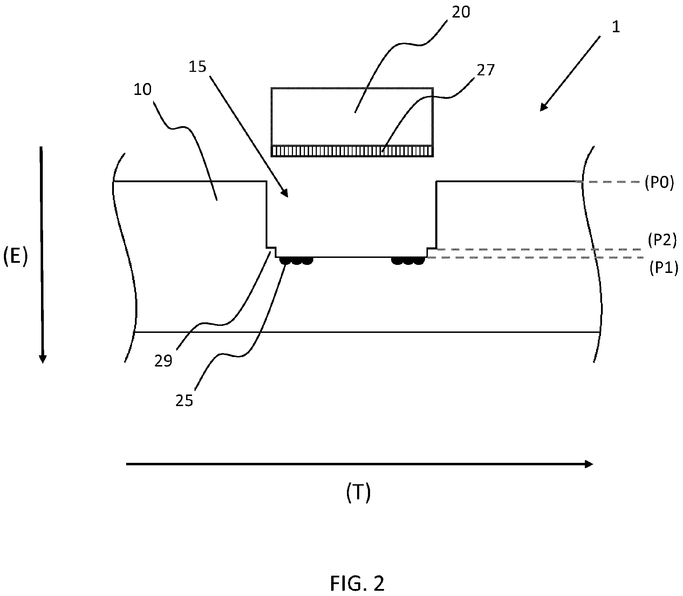

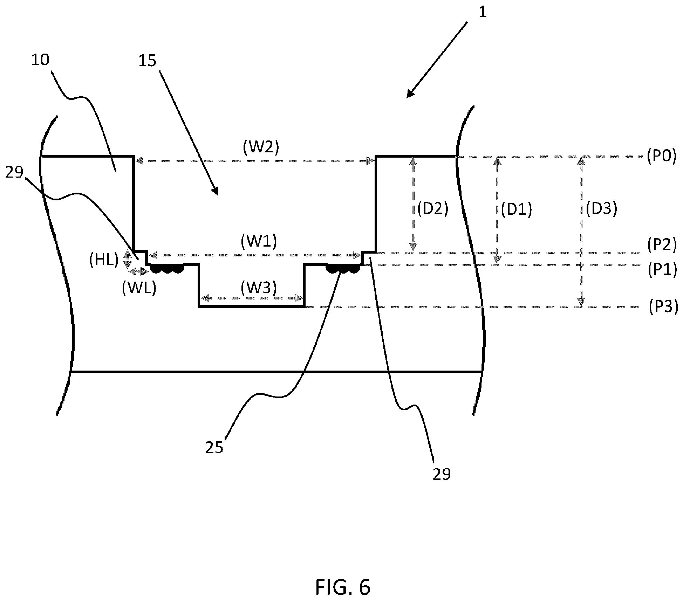

Figure 2 shows a first data carrier 1 according to the invention in an exploded cross section view, before inserting the electronic module 20 in the cavity 15. The data carrier 1 comprises a body 10. This body 10 is represented as a monolayer structure but it can obviously be a multilayered structure as well known from the state of the art. Figure 2 introduces the core inventive solution through a precisely engineered cavity 15 design. The cavity 15 comprises a first depth D1 forming a first plan P1 and a second depth D2 forming a second plan P2. The second depth D2 is inferior to the first depth D1 such that the second plan P2 is located above the first plan P1. The width W1 of the cavity 15 at the level of plan P1 is inferior to the width W2 of the cavity 15 at the level of plan P2 such that a ledge 29 is formed between plan P1 and plan P2. The crucial innovation is the formation of the ledge 29 between these two plans, which serves as a sophisticated corrosion protection mechanism. More details concerning the cavity dimensions will be given in relation with Figure 6.

The cavity is formed by milling the data carrier body. The data carrier 1 comprises an antenna 25 embedded in the body 10. When the cavity reaches plan P1 is exposes a portion of the wire of the antenna 25, such that at least part of the antenna is located at this first plan P1.

The electronic module 20 and the conductive film 27 are adhered together before their insertion inside the module cavity 15. The conductive film represented in Fig. 2 to 5 is an ACF.

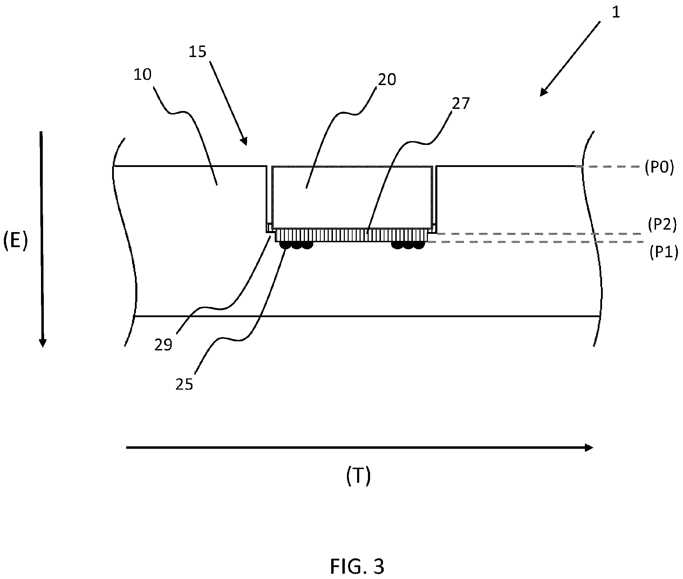

Figure 3 shows the data carrier 1 of Fig. 2 in a cross-section view, after inserting the electronic module 20 in the cavity 15. The conductive film 27 is in contact with the exposed portion of the wire of the antenna 25. Therefore, at least part of the conductive film 27 is located at plan P1. When the electronic module 20 and the conductive film 27 are inserted inside the cavity 15, the conductive film 27 is pressed against plan P1 such that some material of the conductive film 27 flows against and above the ledge 29. Therefore, at least a part of the conductive film 27 is located above the ledge 29. In other words, at least part of the conductive film 27 is located at plan P2 and above.

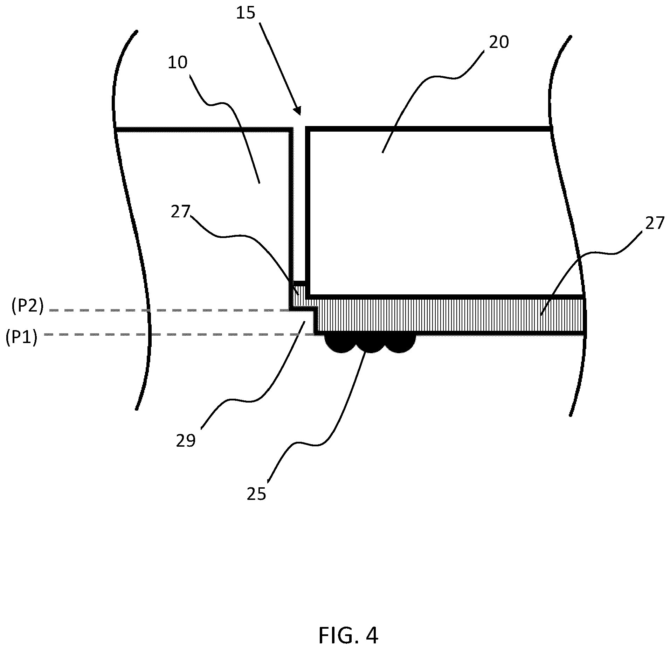

Figure 4 is a zoom part of the data carrier 1 according to the invention in a cross-section view. This figure precisely shows how the conductive film 27 is arranged compared the antenna 25 and the ledge 29. The cavity design at plan P2, located above plan P1, enables the conductive film 27 to extend beyond the antenna's exposed section. In other words, the dimension of at least part of the conductive film 27 along the transverse direction (T) is sensibly similar to the width W2 of the cavity 15 at the level of plan P2, such that the dimension of at least part of the conductive film 27 along the transverse direction (T) is superior to the dimension of the exposed portion of the antenna 25 wire along the transverse direction (T). The geometric configuration of the cavity 15 and the presence of the ledge 29 allows to create a protective overlap, where the conductive film 27 completely covers the exposed antenna 25 portion.

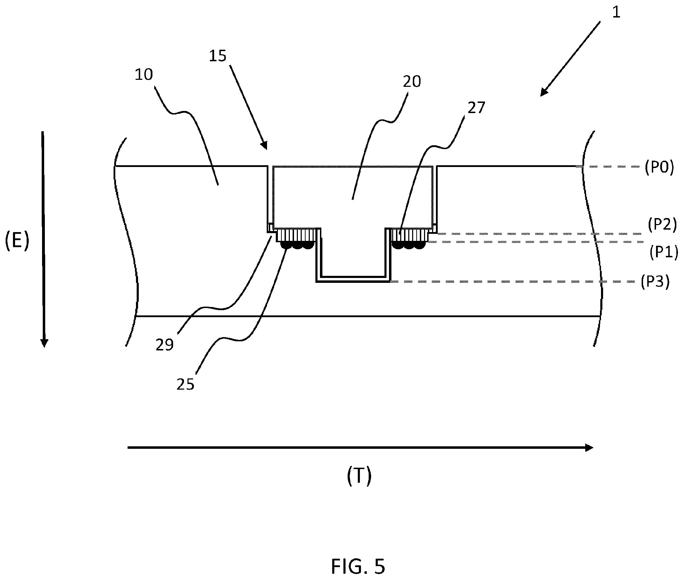

Figure 5 shows a second data carrier 1 according to the invention in a cross section. The only difference with the previous embodiment is that the cavity 15 comprises a third depth D3 forming a third plan P3, the third depth D3 being superior to the first depth D1 such that the third plan P3 is located below the first plan P1. The width W3 of the cavity at the level of plan P3 is inferior to the width W1 of the cavity at the level of plan P1. In this configuration, a distal extremity of the electronic module 20 is located at the level of plan P3. This variation allows for more complex electronic module integrations, particularly for modules requiring additional spatial considerations along the extension direction (E). This figure shows how the principle of antenna protection according to the invention can be maintained while accommodating different module designs. The cavity 15 geometry remains consistent, with the multi-planar approach and the formation of the ledge 29 providing a universal solution for various data carrier configurations.

Figure 6 provides a comprehensive technical breakdown of the cavity's critical dimensional parameters. The figure illustrates depth and width variations at the levels of plan P0, P1, P2 and P3 of the cavity 15. Depth D1 corresponds to the depth of the cavity 15 between plan P0, corresponding to the top surface of the data carrier 1, and plan P1. Width W1 corresponds to the width of the cavity 15 at the level of plan P1. This width W1 is sensibly the same between P1 and P2. Depth D2 corresponds to the depth of the cavity 15 between plan P0 and plan P2. Width W2 corresponds to the width of the cavity 15 at the level of plan P2. This width W2 is sensibly the same between P2 and P0. Depth D3 corresponds to the depth of the cavity 15 between plan P0 and plan P3. Width W3 corresponds to the width of the cavity 15 at the level of plan P3. This width W3 is sensibly the same between P3 and P1.

The figures collectively demonstrate a new approach to protect embedded antenna structures in data carriers. By introducing a multi-planar cavity geometry with a strategically designed ledge, the invention achieves corrosion protection for exposed antenna sections, maintained electrical connectivity, improved manufacturing precision and enhanced durability in challenging environmental conditions.

## Claims

1. A data carrier (1) with a top surface forming a plan P0 and a bottom surface, said data carrier (1) comprising:
- a body (10) comprising a cavity (15),
- a first electronic module (20) positioned at least partially within the cavity (15);
- at least one antenna (25) formed by a wire;
- at least one conductive film (27) connecting the antenna (25) to the first electronic module (20),
the cavity (15) comprising a first depth D1 forming a first plan P1, at least part of the antenna (25) being located on this first plan P1, at least part of the conductive film being located on plan P1,
wherein the cavity (15) comprises a second depth D2 forming a second plan P2, the second depth D2 being inferior to the first depth D1 such that the second plan P2 is located above the first plan P1, the width W1 of the cavity (15) at the level of plan P1 being inferior to the width W2 of the cavity (15) at the level of plan P2 such that a ledge (29) is formed between plan P1 and plan P2, at least part of the conductive film being located above the ledge (29).

2. A data carrier (1) according to claim 1, wherein the data carrier (1) extends along an extension direction (E) corresponding to the thickness of the data carrier (1) and the depth of the cavity (15), and along a transverse direction (T) running perpendicularly to the extension direction (E) of the data carrier (1), the antenna (25) comprises an exposed portion corresponding to the part of the antenna wire in the cavity (15), the dimension of the exposed portion of the antenna (25) along the transverse direction (T) being sensibly similar to the width W1 of the cavity (15) at the level of plan P1.

3. A data carrier (1) according to claim 2, wherein the dimension of at least part of the conductive film (27) along the transverse direction (T) is sensibly similar to the width W2 of the cavity at the level of plan P2, such that the dimension of at least part of the conductive film (27) along the transverse direction (T) is superior to the dimension of the exposed portion of the antenna (25) wire along the transverse direction (T).

4. A data carrier (1) according to any of the preceding claims, wherein the heigh (HL) and/or the width (WL) of the ledge (29) is at least equal to the thickness of a wire forming the antenna (25), and
wherein the heigh (HL) and/or width (WL) of the ledge (29) is comprised between 50µm and 150µm.

5. A data carrier (1) according to any of the preceding claims, wherein the conducting mean (27) comprises an ACF (Anisotropic Conductive Film).

6. A data carrier (1) according to claim 5, wherein the thickness of the ACF is comprised between 30µm and 70µm.

7. A data carrier (1) according to any of the preceding claims, wherein the upper surface of the first electronic module (20) flushes the top surface of the data carrier.

8. A data carrier (1) according to any of the preceding claims, wherein the cavity (15) comprises a third depth D3 forming a third plan P3, the third depth D3 being superior to the first depth D1 such that the third plan P3 is located below the first plan P1, the width W3 of the cavity at the level of plan P3 being inferior to the width W1 of the cavity at the level of plan P1, a distal extremity of the first electronic module (20) being located at the level of plan P3.

9. A data carrier (1) according to any of the preceding claims, wherein the data carrier (1) comprises a second electronic module (30), the second electronic module (30) comprising a module sensor (31) for biometric reading, such as notably fingerprint reading.

10. A data carrier (1) according to claim 9, wherein the first electronic module (20) is physically connected to the second electronic module (30)

11. A data carrier (1) according to any of the preceding claims, wherein the data carrier comprises a metal layer, said metal layer forming the top surface of the data carrier (1).

12. A secure article (100) comprising or consisting of at least one data carrier (1) as claimed in any one of the preceding claims, wherein the secure article (100) preferably is a smart card.

13. A method of producing a data carrier (1), preferably a data carrier (1) as claimed in any one of claims 1 to 13, wherein the method comprises the steps of:
- providing a body (10),
- providing at least one antenna (25);
- milling the body (10) to form a first portion of a cavity (15) having a first depth D1 and forming a first plan P1, the antenna (25) being located on this first plan P1;
- milling the body (10) to form a second portion of the cavity (15) having a second depth D2 and forming a second plan P2, the second depth D2 being inferior to the first depth D1 such that the second plan P2 is located above the first plan P1, the width W1 of the cavity at the level of plan P1 being inferior to the width W2 of the cavity at the level of plan P2 such that a ledge (29) is formed between plan P1 and plan P2;
- providing a first electronic module (20) positioned at least partially within the cavity (15) and at least one conductive film (27) connecting the antenna (25) to the first electronic module (20), at least part of the conductive film (27) being located on plan P1, at least part of the conductive film (27) being located above the ledge (29).

14. A method according to claim 13, wherein the two steps of milling are simultaneous such that the formation of the cavity (15) is performed in a single step.

15. A method according to claim 14, wherein it comprises a step of milling the body (10) to form a third portion of the cavity (15) having a third depth D3 and forming a third plan P3, the third depth D3 being superior to the first depth D1 such that the third plan P3 is located below the first plan P1, the width W3 of the cavity at the level of plan P3 being inferior to the width W1 of the cavity at the level of plan P1, a distal extremity of the first electronic module (20) being located at the level of plan P3.
